# EUROPÄISCHE PATENTSCHRIFT

(11) **EP 3 093 117 B1**
(45) Veröffentlichungstag und Bekanntmachung des Hinweises auf die Patenterteilung: **11.03.2020**
(21) Anmeldenummer: 15167206.0
(22) Anmeldetag: 11.05.2015
(51) Int. Cl.: B29C 45/26, B29C 33/30

(54) **SPRITZGIESSWERKZEUG**
INJECTION MOULDING TOOL
OUTIL DE MOULAGE PAR INJECTION

(43) Veröffentlichungstag der Anmeldung: 16.11.2016
(73) Patentinhaber: Haidlmair Holding GmbH, 4542 Nussbach (AT)
(72) Erfinder: Mayrhofer, Alfred Markus, 4621 Sipbachzell (AT)
(74) Vertreter: Jell, Friedrich

(56) Entgegenhaltungen:
- EP-A1- 2 821 199
- DE-U1- 20 218 743
- US-A1- 2005 271 763
- US-A1- 2006 034 970
- US-A1- 2009 110 477

## Beschreibung

Die Erfindung betrifft ein Spritzgießwerkzeug nach dem Oberbegriff des Anspruchs 1.

Um die Formgebung einer Kavität eines Spritzgießwerkzeugs ändern zu können - ohne dafür eine gesamte Formplatte austauschen zu müssen - ist es aus dem Stand der Technik bekannt, die Formplatte mit einem auswechselbaren Formeinsatz zu versehen, der an die Kavität angrenzt und damit zur Formgebung des Formteils beiträgt. Konstruktiv weist hierzu der Grundkörper der Formplatte eine Ausnehmung auf, in die der Formeinsatz eingesetzt, über eine Schraubverbindung am Grundkörper befestigt ist. Schraubverbindungen bedingen jedoch Bohrungen bis an die Kavitätsseite des Formeinsatzes, wodurch folglich am Formeinsatz Maßnahmen erforderlich sind, die Kontur der Bohrung zu verbergen. Beispielsweise wird dies mit einer Vergussmasse gelöst. Derartige Maßnahmen sind jedoch vergleichsweise aufwendig, teuer und zweitintensiv, was schnellen und einfachen Änderung in der Formgebung der Kavität eines Spritzgießwerkzeugs entgegensteht.

Um die Formgebung der Kavität schneller verändern zu können, ist aus der DE4330536A1 bekannt, in der Grundplatte der Formplatte einen drehbar gelagerten Formeinsatz vorzusehen. Nachteilig ist jedoch, dass ein drehbar gelagerter Formeinsatz eine vielfältige Änderungsmöglichkeit in Bezug auf die Kavität beschränkt.

Die EP2821199A1 zeigt die Merkmale des Oberbegriffs des Anspruchs 1.

Die Erfindung hat sich daher die Aufgabe gestellt, ein Spritzgießwerkzeug mit einer über einen Formeinsatz veränderbaren Kavitätsform der eingangs geschilderten Art konstruktiv derart zu verändern, dass dies auch bei hoher Vielfalt an Änderungsmöglichkeiten schnell und zuverlässig erfolgen kann. Zudem soll das Spritzgießwerkzeug konstruktiv einfach ausgebildet sein.

Die Erfindung löst die gestellte Aufgabe durch die Merkmale des Anspruchs 1.

Weist der Grundkörper Druckmittel auf, kann dieses zur erleichterten Handhabung einer lösbaren Verbindung zwischen Grundkörper und Formeinsatz genutzt werden, wenn die lösbare Verbindung mindestens ein im Grundkörper beweglich gelagertes Rastelement aufweist, das mit dem Formeinsatz in Abhängigkeit des Drucks des Druckmittels entweder zum Lösen oder zum Sperren der Verbindung zwischen Grundkörper und Formeinsatz zusammenwirkt. Zudem bedarf es für solch eine lösbare Verbindung mit druckbewegtem Rastelement keiner besonderen Maßnahmen auf der, der Kavität zugewandten Seite des Formeinsatzes. Der Formeinsatz kann daher handhabungsfreundlich und schnell ausgewechselt werden - und zwar trotz der vergleichsweise hohen Vielfalt an Änderungsmöglichkeiten an der Kavitätsform. Außerdem ist eine Rastverbindung vergleichsweise einfach herzustellen, womit eine konstruktive Einfachheit am Spritzgießwerkzeug gewahrt bleiben kann. Hinzu kommt, dass durch eine vom Druckmittel nahezu frei wählbare Druckhöhe, das Rastelement der Verbindung zuverlässig bewegt werden können, wodurch die Verbindung zwischen Grundkörper und Formeinsatz sicher gesperrt bzw. gelöst werden kann. Auf diese Weise kann selbst nach einer größeren Anzahl an Betriebsstunden bzw. nach einer hohen Schussanzahl am Spritzgusswerkzeug eine einfache und sichere Austauschbarkeit des Formeinsatzes gewährleistet bleiben, was zu einer hohen Standfestigkeit am Spritzgusswerkzeug führen kann.

Im Allgemeinen wird erwähnt, dass ein derartiges Druckmittel durch beispielsweise einen elektromechanischen, hydraulischen, pneumatischen oder pneumohydraulischen Antrieb, vorzugsweise Linearantrieb, ausgebildet werden kann. Ein derartiges Druckmittel kann konstruktiv einfach gelöst beispielsweise ein einfachwirkender hydraulischer, pneumatischer oder pneumohydraulischer Zylinder sein. Des Weiteren ist auch ein Schieber denkbar, um diesen Druck zu erzeugen.

Die Konstruktion des Spritzgießwerkzeugs kann weiter vereinfacht werden, wenn die lösbare Verbindung mindestens eine Verriegelungsausnehmung am Formeinsatz aufweist, wobei das Rastelement in Abhängigkeit des Drucks des Druckmittels entweder zum Lösen der Verbindung zwischen Grundkörper und Formeinsatz aus der Verriegelungsausnehmung am Formeinsatz ausrückbar oder zum Sperren der Verbindung zwischen Grundkörper und Formeinsatz in die Verriegelungsausnehmung am Formeinsatz einrückbar ausgebildet ist. Zudem kann durch das Zusammenwirken von Rastelement und Verriegelungsausnehmung eine kompakt ausgeführte lösbare Verbindung geschaffen werden, womit sich diese erfindungemäße Verbindung selbst für vergleichsweise kleine Formeinsätze eignen kann.

Die Baugröße der lösbaren Verbindung kann weiter verkleinert werden, wenn der Formeinsatz einen Verriegelungszapfen mit der Verriegelungsausnehmung aufweist. Zudem kann ein Verriegelungszapfen die mechanische Verwindungssteifigkeit der Verbindung maßgeblich erhöhen, womit die Standfestigkeit des Spritzgießwerkzeugs weiter erhöhbar wird.

Weist das Rastelement mindestens eine Rastkugel auf, kann die Baugröße der lösbaren Verbindung zusätzlich reduziert werden. Vorzugsweise sind mehrere parallel wirkende Rastkugeln vorgesehen.

Die Konstruktion der lösbaren Verbindung kann zudem vereinfacht - und somit die Herstellungs- und Wartungskosten verringert werden -, wenn das Rastelement als Rastkugel ausgebildet ist.

Die lösbare Verbindung kann nicht nur zum Befestigen des Formeinsatzes dienen, sondern auch ein Lösen eines in der Ausnehmung festsitzenden Formeinsatzes erleichtern. Hierzu kann die lösbare Verbindung am Grundkörper beweglich, insbesondere verschiebbar, gelagert sein. Durch diese Bewegung können nämlich beispielsweise als stoffschlüssige Verbindung wirkende Verunreinigungen oder Rost in der Fuge zwischen Ausnehmung und Formeinsatz aufgebrochen bzw. damit die stoffschlüssige Verbindung zerstört werden. Diese Bewegung der lösbaren Verbindung kann eine Dreh- oder Linearbewegung, beispielsweise zur Kavität hin, darstellen. Konstruktiv einfach gelöst kann die Kraft zur Bewegung der lösbaren Verbindung durch das Druckmittel bewerkstelligt werden, das auch zum Bewegen des Rastelements herangezogen wird. Zudem kann mit einer Bewegung, insbesondere Herausbewegung, der lösbaren Verbindung auch die Begrenzung des Formeinsatzes an der Formplatte optisch leichter erkannt werden, was die Handhabung des Spritzgießwerkzeugs erleichtern kann.

Um die der Formplatte zugeordneten Verbindungsmitteln der lösbaren Verbindung zuverlässig gegenüber einem Abziehen zu sichern, bildet der Grundkörper zur Begrenzung der Beweglichkeit der lösbaren Verbindung einen Anschlag aus, der die verschiebbare Verlagerung der lösbaren Verbindung zur Kavität hin anschlagbegrenzt.

Um die Wirkung der Druckleitung auf die beweglichen Teile der Formplatte einzustellen bzw. eventuell zu verstärken, kann vorgesehen sein, dass der Betätigungskolben zur Bewegung, insbesondere Verschiebung, des Rastelements in der lösbaren Verbindung und zur Bewegung der lösbaren Verbindung gegenüber dem Grundkörper wirkverbunden ist. Hohe Bewegungskräfte können daher selbst mit vergleichsweise niedrigen Drücken auf das Rastelement übertragen werden - was die Zuverlässigkeit der lösbaren Verbindung erhöhen kann.

Vorstehende Vorteile können auch zur Bewegung der lösbaren Verbindung genutzt werden, wenn die lösbare Verbindung an der Kolbenstange des Betätigungskolbens gelagert ist. Damit kann selbst eine vergleichsweise hohe Haltekraft auf den Formeinsatz gelöst werden, wie diese beispielsweise durch eventuelle Kunststoffreste in der Fugen zwischen Formeinsatz und Ausnehmung entstehen können. Die Standfestigkeit des Spritzgießwerkzeugs ist dadurch weiter erhöhbar.

Weist der einfachwirkende Betätigungszylinder eine Kolbenfeder auf, die den Betätigungskolben von der Kavität weg federbelastet, kann die lösbare Verbindung in seiner Lage in der Ausnehmung gesichert werden. Zudem kann diese federbelastete Kolbenlage die lösbare Verbindung gegenüber Stoßbelastungen, wie diese beispielsweise beim Öffnen und Schießen des Spritzgießwerkzeugs auftreten können, unempfindlicher ausgestalten. Auf diese Weise kann die Standfestigkeit des Spritzgießwerkzeugs weiter erhöht werden.

Ist die Druckleitung als pneumatische Druckleitung ausgebildet, kann, etwa im Gegensatz zu hydraulischen Druckleitungen, die Gefahr einer Verschmutzung in der Kavität auf konstruktiv einfache Weise vermieden werden.

Die Konstruktion im Bereich der lösbaren Verbindung kann weiter vereinfacht werden, wenn die lösbare Verbindung sowohl eine Einsenkung als auch einen im Grundkörper verschiebbar gelagerten Haltering mit mindestens einer Führungsöffnung ausbildet, in der das Rastelement verschiebbar gelagert ist, wobei der Haltering in Abhängigkeit des Drucks des Druckmittels zwischen seiner Verriegelungs- oder Entriegelungsstellung zum Bewegen des Rastelements verschiebbar ausgebildet ist, in welcher Entriegelungsstellung die Einsenkung an die Führungsöffnung des Halterings zum Eindringen des Rastelements und damit zum Lösen der Verbindung zwischen Grundkörper und Formeinsatz anschließt. Zudem kann damit eine strandfeste Rastverbindung ausgebildet werden, die - da konstruktiv kompakt ausgeführt - selbst für kleine Baugrößen an der Formplatte geeignet sein kann.

Vorzugsweise ist der Haltering mit dem Betätigungskolben des Betätigungszylinders fest verbunden, um eine standfeste Bewegung der lösbaren Verbindung und deren Rastelement zu gewährleisten.

Weist der Formeinsatz ein magnetisch anziehbares Material auf, kann dieser nach einem Lösen der Verbindung mit dem Grundkörper der Formplatte zuverlässig und vergleichsweise handhabungsfreundlich mithilfe eines Magneten aus der Ausnehmung entfernt werden.

In den Figuren ist beispielsweise der Erfindungsgegenstand anhand einer Ausführungsvariante schematisch dargestellt. Es zeigen
- Fig. 1: eine abgerissene Schnittansicht auf ein geschlossenes Spritzgießwerkzeug,
- Fig. 2: eine Detailansicht der Fig. 1,
- Fig. 3: eine abgerissene Schnittansicht auf das Spritzgießwerkzeug nach Fig. 1 bei geöffneter Kavität und
- Fig. 4: eine Detailansicht der Fig. 3.

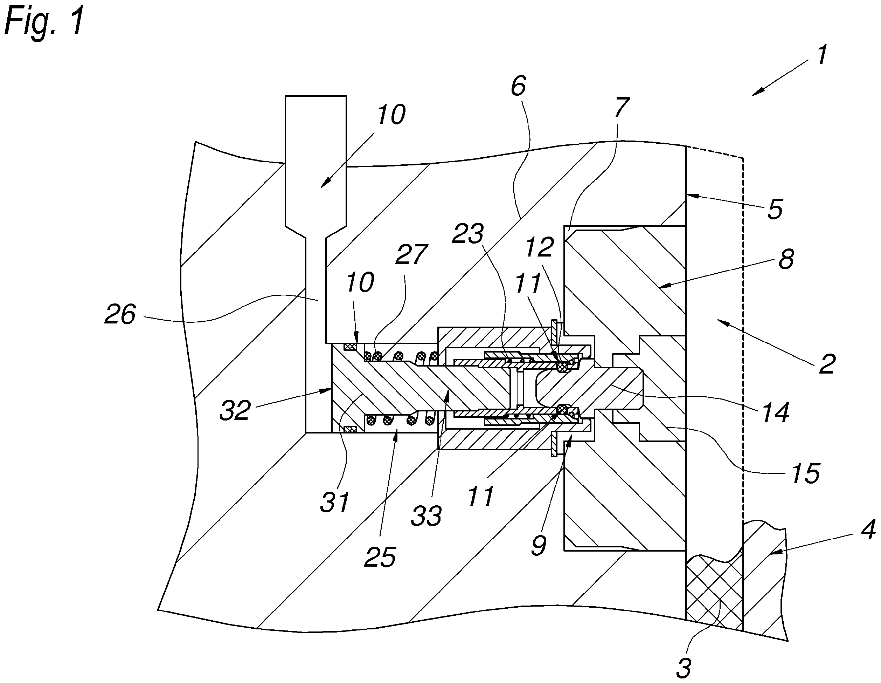

Gemäß Fig. 1 ist ein geschlossenes Spritzgießwerkzeug 1 gezeigt, das eine Kavität 2 zur Ausbildung eines nicht näher dargestellten Formteils 3 aufweist. Die Kavität 2 wird bei geschlossenem Spritzgießwerkzeug 1 zwischen mehreren Formplatten 4, 5 ausgebildet, die somit die Kavität 2 begrenzen, wobei der Übersichtlichkeit halber in Fig. 1 die Formplatten 4, 5 nur teilweise dargestellt worden sind. Die Formplatte 5 zeigt einen Grundkörper 6, in welchem eine Ausnehmung zur Ausbildung einer Aufnahme 7 eingebracht ist. In dieser Aufnahme 7 ist ein Formeinsatz 8 vorgesehen, der gemeinsam mit dem Grundkörper 6 die Kavität 2 begrenzt. Damit der Formeinsatz 8 am Grundkörper 6 gehalten wird, weist die Formplatte 5 eine Verbindung 9 auf. Diese Verbindung 9 ist lösbar ausgebildet, um den Formeinsatz 8 der Aufnahme 7 entnehmen und durch einen, beispielsweise auf der Seite zur Kavität 2 anders ausgebildeten, Formeinsatz 8 zu ersetzen bzw. auszuwechseln zu können.

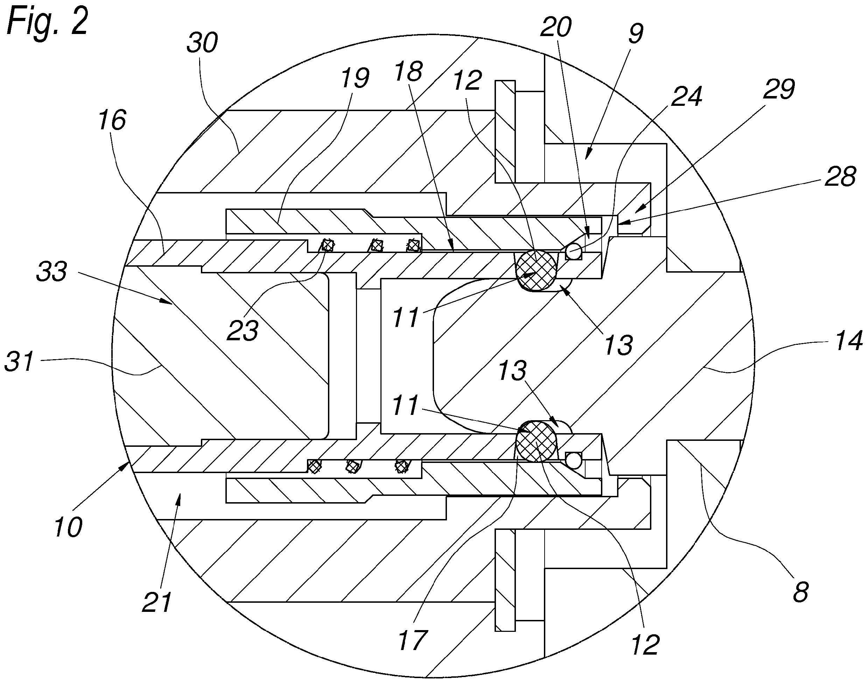

Im Grundkörper 6 ist zudem ein Druckmittel 10 vorgesehen, die mit der lösbaren Verbindung 9 in Wirkverbindung steht, wie dies nachstehend noch näher beschrieben wird. Die lösbare Verbindung 9 weist nämlich im Grundkörper 6 ein beweglich gelagertes Rastelement 11 auf, wie dieses in der Detailansicht nach Fig. 2 anhand von mehreren Rastkugeln 12 erkannt werden kann. Das Rastelement 11 bzw. die Rastkugeln 12 wirkt nun in Abhängigkeit des Drucks des Druckmittels 10 mit dem Formeinsatz 8 entweder zum Lösen oder zum Sperren der Verbindung 9 zwischen Grundkörper 6 und Formeinsatz 8 zusammen. Dies, indem das im Grundkörper 6 verschiebbar gelagerte Rastelement 11 in eine Verriegelungsausnehmung 13 am Formeinsatz 8 in Abhängigkeit des Drucks ausrückbar - nämlich zum Lösen der Verbindung 9 - oder einrückbar - zum Sperren der Verbindung 9 - ausgebildet ist. Mit diesem erfindungsgemäßen Riegelmechanismus wird eine schlanke lösbare Verbindung 9 ausbildet. Selbst ein vergleichsweise kleiner Formeinsatz 8 kann auf diese Weise auswechselbar an der Formplatte 4 vorgesehen werden.

Diese Verriegelungsausnehmung 13 befindet sich auf einem Verriegelungszapfen 14, wobei der Verriegelungszapfen 14 über einen Magnethalter 15 des Formeinsatzes 8 aus einem magnetisch anziehbaren Material am Formeinsatz 8 befestigt ist.

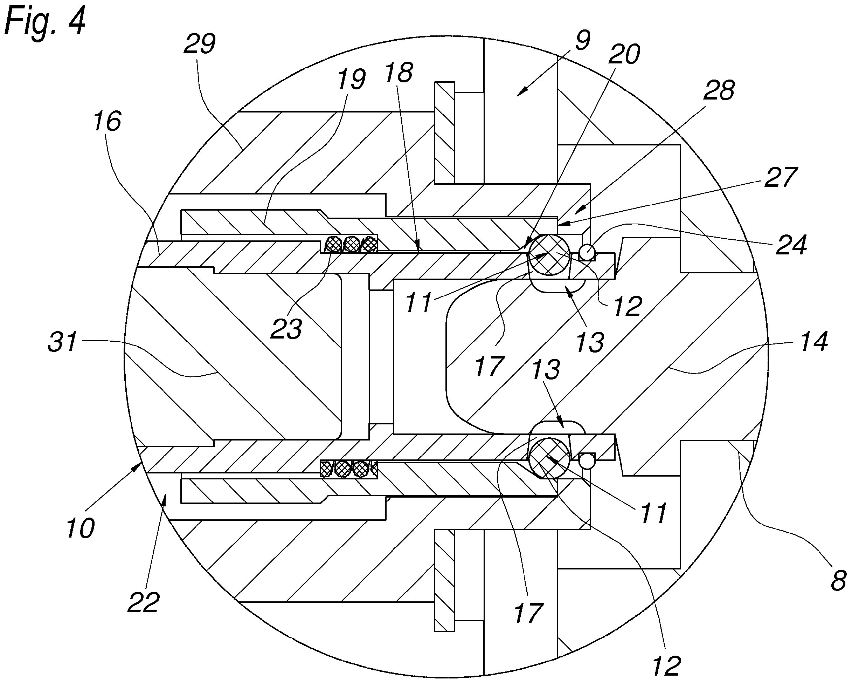

Um das Rastelement 11 zu verschieben, ist im Grundkörper 6 ein verschiebbar gelagerter Haltering 16 vorgesehen, in den mehrere Führungsöffnungen 17 zur Aufnahme der Rastkugeln 12 vorgesehen sind. In diesen Führungsöffnungen 17 sind die Rastkugeln 12 lose gelagert und werden in ihrer Bewegungsfreiheit einerseits durch eine sich zu einem Ende verjüngende Führungsöffnung 17, in Fig. 2 zu erkennen, und andererseits durch eine Führungsfläche 18 am Grundkörper 6 begrenzt. Diese Führungsfläche 18 wird von einem Kupplungsring 19 ausgebildet, der als Teil des Grundkörpers 6 an seinem konischen Ringende eine Einsenkung 20 an der Führungsfläche 18 ausbildet. Wird der Haltering 16 in Richtung des Formeinsatzes 8 verschoben - und zwar von seiner nach Fig. 2 gezeigten Verriegelungsstellung 21 in die nach Fig. 4 gezeigte Entriegelungsstellung 22, dann schließt diese Einsenkung 20 an die Führungsöffnung 17 an, sodass das Rastelement 11 bzw. die Rastkugeln 12 dort eindringen und somit aus der Verriegelungsausnehmung 13 des Formeinsatzes 8 ausrücken kann bzw. können. In der Entriegelungsstellung 22 des Kupplungsrings 19 ist damit die Verbindung 9 bzw. Rastverbindung zwischen Grundkörper 6 und Formeinsatz 8 gelöst.

Befindet sich der Haltering 16 in der Verriegelungsstellung 21, wie diese nach Fig. 2 dargestellt ist, wird andererseits durch die Führungsfläche 18 am zylindrischen Teil des Kupplungsrings 19 das Rastelement 11 bzw. die Rastkugeln 12 in die Verriegelungsausnehmung 13 des Formeinsatzes 8 eingerückt. In dieser Verriegelungsstellung 21 des Kupplungsrings 19 ist damit die Verbindung 9 bzw. die Rastverbindung zwischen Grundkörper 6 und Formeinsatz 8 gesperrt.

Konstruktiv einfach gelöst ist der Kupplungsring 19 am Haltering 16 gegen eine Kupplungsringfeder 23 verschiebbar verlagert und wird über einen Sicherungsring 24 am Haltering 16 gegenüber einem Abziehen gesichert.

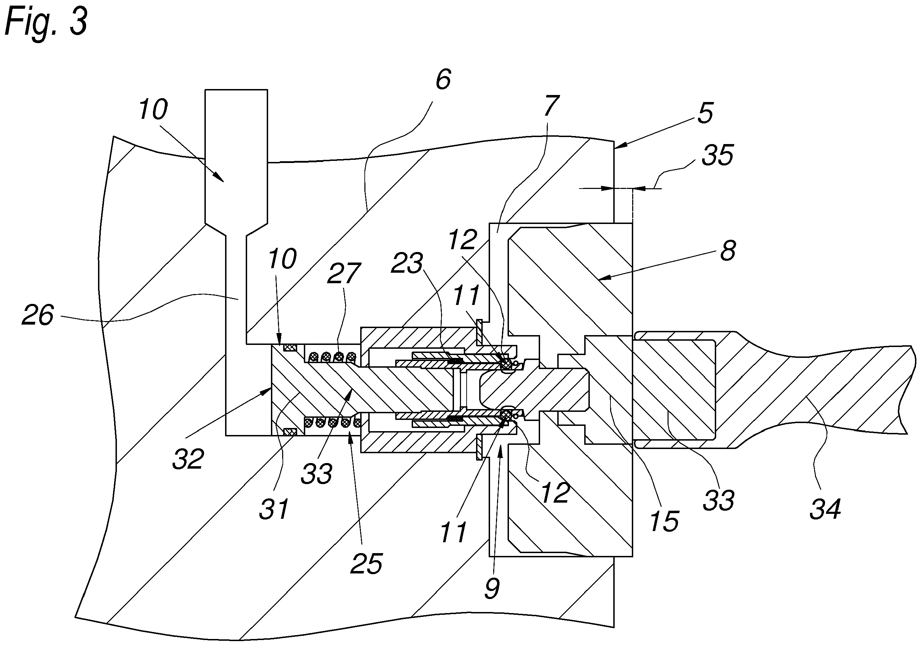

Wie zudem den Figuren 1 und 3 zu entnehmen, weist das Druckmittel 10 eine pneumatische Druckleitung 26 auf, die an einen Betätigungszylinder 25 des Druckmittels 10 angeschossen ist. Der Betätigungskolben 31 des Betätigungszylinders 25 ist im Grundkörper 6 verschiebbar gelagert. Der Haltering 16 wird nun mithilfe dieses verschiebbar gelagerten Betätigungskolbens 31 linear geführt, wobei der Haltering 16 an der Kolbenstange 33 des Betätigungskolbens 31 befestigt ist.

Da die Druckleitung 26 am Kolbenboden 32 des Betätigungskolbens 31 endet, ist über den Betätigungszylinder 25 das Druckmittel 26 und die lösbare Verbindung 9 miteinander zur Verschiebung des Rastelements 11 wirkverbunden.

Der Betätigungskolben 31 ist zudem durch eine schraubenförmige Kolbenfeder 27 in Richtung des inneren Umkehrpunkts gedrückt, bzw. von der Kavität 2 weg federbelastet, wodurch konstruktiv einfach ein einfachwirkender Betätigungszylinder 25 ausgebildet wird. Außerdem wird damit die lösbare Verbindung 9 in der Sperrlage gesichert. Zudem wird auf diese Weise eine zuverlässige Rückstellung des Betätigungskolbens 31 sichergestellt.

Des Weiteren kann durch die Verschiebung des Halterings 16 neben dem Lösen der Verbindung 9 auch noch ermöglicht werden, dass die lösbare Verbindung 9 selbst im Grundkörper verschoben wird. Verunreinigungen, Verkrustungen, eingedrungenes Spritzguss-Material oder diverse stoffschlüssige Verbindungen in der Fuge zwischen Aufnahme 7 des Grundkörpers 6 und dem Formeinsatz 8 können damit gelöst werden. Damit kann selbst ein vergleichsweise stark festgesessener Formeinsatz 8 effizient gelöst werden. Vorstellbar ist ebenfalls, dass der Formeinsatz 8 samt der Verbindung 9 eine Drehbewegung ausführt.

Da der Haltering 16 am Betätigungskolben 31 befestigt und damit die lösbare Verbindung 9 an der Kolbenstange 33 des Betätigungskolbens 31 gelagert ist, werden sowohl die lösbare Verbindung 9 als auch das Rastelement 11 im Grundkörper 6 gemeinsam betätigt. Und zwar wird das Rastelement 11 in der lösbaren Verbindung verschoben und die lösbare Verbindung 9 wird gegenüber dem Grundkörper 6 verschoben.

Zunächst wird nämlich die lösbare Verbindung 9 in Richtung Kavität 2 verschoben wird, welche Verschiebung durch einen Anschlag 28 im Grundkörper begrenzt wird. Wie der Fig. 4 zu entnehmen, steht hierfür der Kupplungsring 19 an einer Anschlagnase 29 eines Anschlagteils 30 an. Damit springt der Formeinsatz 8 der Grundplatte 6 um einen nach Fig. 3 erkennbaren Stellweg 35 vor. Unerwünschte stoffschlüssige Verbindungen in der Fuge zwischen Ausnehmung 7 und Formeinsatz 8 können daher zunächst gelöst werden. Zudem ist damit der Formeinsatz 8 einfacher an der Formplatte optisch zu finden.

Nach dieser Bewegung gelangt der Haltering 16 bzw. dessen Führungsöffnungen 17 in Flucht mit der Einsenkung 20, wodurch die verschobene Verbindung 9 gelöst und der Formeinsatz 8 freigegeben wird.

Mit einem am Magnethalter 15 des Formeinsatzes 8 angesetztem Werkzeug 33, beispielsweise einen Permanentmangenten 34 enthaltend, kann der freigegebene Formeinsatz 8 aus der Ausnehmung 7 entnommen werden.

## Patentansprüche

1. Spritzgießwerkzeug mit einer Kavität (2) zur Ausbildung eines Formteils und mit zumindest einer die Kavität (2) wenigstens bereichsweise begrenzenden Formplatte (5), die einen Grundkörper (6) mit einer Aufnahme (7), einen in der Aufnahme (7) vorgesehenen, die Kavität (2) begrenzenden Formeinsatz (8) und eine lösbare Verbindung (9) zwischen dem Grundkörper (6) und dem Formeinsatz (8) zum Auswechseln des Formeinsatzes (8) aufweist, wobei der Grundkörper (6) Druckmittel (10) aufweist, und wobei die lösbare Verbindung (9) mindestens ein im Grundkörper (6) beweglich gelagertes Rastelement (11) aufweist, das mit dem Formeinsatz (8) in Abhängigkeit des Drucks des Druckmittels (10) entweder zum Lösen oder zum Sperren der Verbindung (9) zwischen Grundkörper (6) und Formeinsatz (8) zusammenwirkt, wobei die lösbare Verbindung (9) mindestens eine Verriegelungsausnehmung (13) am Formeinsatz (8) aufweist, und wobei das Rastelement (11) in Abhängigkeit des Drucks des Druckmittels (10) entweder zum Lösen der Verbindung (9) zwischen Grundkörper (6) und Formeinsatz (8) aus der Verriegelungsausnehmung (13) am Formeinsatz (8) ausrückbar oder zum Sperren der Verbindung (9) zwischen Grundkörper (6) und Formeinsatz (8) in die Verriegelungsausnehmung (13) am Formeinsatz (8) einrückbar ausgebildet ist, **dadurch gekennzeichnet, dass** die lösbare Verbindung (9) am Grundkörper (6) in Abhängigkeit des Drucks des Druckmittels (10) beweglich, insbesondere verschiebbar, gelagert ist.

2. Spritzgießwerkzeug nach Anspruch 1, **dadurch gekennzeichnet, dass** der Formeinsatz (8) einen Verriegelungszapfen (14) mit der Verriegelungsausnehmung (13) aufweist.

3. Spritzgusswerkzeug nach Anspruch 1 oder 2, **dadurch gekennzeichnet, dass** das Rastelement (11) im Grundkörper (6) verschiebbar gelagert ist.

4. Spritzgießwerkzeug nach Anspruch 3, **dadurch gekennzeichnet, dass** das Rastelement (11) mindestens eine Rastkugel (12) aufweist.

5. Spritzgießwerkzeug nach Anspruch 1, **dadurch gekennzeichnet, dass** der Grundkörper (6) einen Anschlag (28) ausbildet, der die verschiebbare Verlagerung der lösbaren Verbindung (9) zur Kavität (2) hin anschlagbegrenzt.

6. Spritzgießwerkzeug nach einem der Ansprüche 1 bis 5, **dadurch gekennzeichnet, dass** das Druckmittel (10) eine Druckleitung (26) und einen daran angeschlossenen Betätigungszylinder (25) aufweist, der über seinen Betätigungskolben (31) mit der lösbaren Verbindung (9) wirkverbunden ist.

7. Spritzgießwerkzeug nach Anspruch 6, **dadurch gekennzeichnet, dass** der Betätigungskolben (31) zur Bewegung, insbesondere Verschiebung, des Rastelements in der lösbaren Verbindung (9) und zur Bewegung der lösbaren Verbindung (9) gegenüber dem Grundkörper (6) wirkverbunden ist.

8. Spritzgießwerkzeug nach Anspruch 6 oder 7, **dadurch gekennzeichnet, dass** die lösbare Verbindung (9) an der Kolbenstange (33) des Betätigungskolbens (31) gelagert ist.

9. Spritzgießwerkzeug nach Anspruch 6, 7 oder 8, **dadurch gekennzeichnet, dass** der einfachwirkende Betätigungszylinder (25) eine Kolbenfeder (27) aufweist, die den Betätigungskolben (31) von der Kavität (2) weg federbelastet.

10. Spritzgießwerkzeug nach einem der Ansprüche 6 bis 9, **dadurch gekennzeichnet, dass** die Druckleitung (26) als pneumatische Druckleitung (26) ausgebildet ist.

11. Spritzgießwerkzeug nach einem der Ansprüche 1 bis 10, **dadurch gekennzeichnet, dass** die lösbare Verbindung (9) sowohl eine Einsenkung (20) als auch einen im Grundkörper (6) verschiebbar gelagerten Haltering (16) mit mindestens einer Führungsöffnung (17) ausbildet, in der das Rastelement (11) lose gelagert ist, wobei der Haltering (16) in Abhängigkeit des Drucks des Druckmittels (10) zwischen seiner Verriegelungs- oder Entriegelungsstellung zum Bewegen des Rastelements (11) verschiebbar ausgebildet ist, in welcher Entriegelungsstellung die Einsenkung (20) an die Führungsöffnung (17) des Halterings (16) zum Eindringen des Rastelements (11) und damit zum Lösen der Verbindung (9) zwischen Grundkörper (6) und Formeinsatz (8) anschließt.

12. Spritzgießwerkzeug nach Anspruch 11, **dadurch gekennzeichnet, dass** der Haltering (16) mit dem Betätigungskolben (31) des Betätigungszylinders (25) fest verbunden ist.

13. Spritzgießwerkzeug nach einem der Ansprüche 1 bis 12, **dadurch gekennzeichnet, dass** der Formeinsatz (8) ein magnetisch anziehbares Material aufweist.

## Claims

1. Injection molding tool with a cavity (2) for forming a molded part and with at least one mold plate (5) which delimits the cavity (2) at least in some regions and which has a base body (6) with a receptacle (7), a mold insert (8) provided in the receptacle (7) and delimiting the cavity (2), and a releasable connection (9) between the base body (6) and the mold insert (8) for exchanging the mold insert (8), wherein the base body (6) has pressure means (10), and wherein the releasable connection (9) has at least one latching element (11) which is movably mounted in the base body (6) and cooperates with the mold insert (8) either to release or to block the connection (9) between the base body (6) and the mold insert (8), depending on the pressure of the pressure means (10), wherein the releasable connection (9) has at least one locking recess (13) on the mold insert (8), and wherein the latching element (11) is designed, depending on the pressure of the pressure means (10), either to be disengageable from the locking recess (13) on the mold insert (8) for releasing the connection (9) between the base body (6) and the mold insert (8) or to be engageable in the locking recess (13) on the mold insert (8) for locking the connection (9) between the base body (6) and the mold insert (8), **characterized in that** the releasable connection (9) is mounted on the base body (6) so as to be movable, more particularly displaceable, depending on the pressure of the pressure means (10).

2. Injection molding tool according to claim 1, **characterized in that** the mold insert (8) has a locking pin (14) with the locking recess (13).

3. Injection molding tool according to claim 1 or 2, **characterized in that** the locking element (11) is displaceably mounted in the base body (6).

4. Injection molding tool according to claim 3, **characterized in that** the latching element (11) has at least one latching ball (12).

5. Injection molding tool according to claim 1, **characterized in that** the base body (6) forms a stop (28) which stop-limits the displaceable displacement of the releasable connection (9) towards the cavity (2).

6. Injection molding tool according to one of claims 1 to 5, **characterized in that** the pressure means (10) has a pressure line (26) and an actuating cylinder (25) connected thereto, which is operatively connected to the releasable connection (9) via its actuating piston (31).

7. Injection molding tool according to claim 6, **characterized in that** the actuating piston (31) is operatively connected for movement, more particularly displacement, of the latching element in the releasable connection (9) and for movement of the releasable connection (9) relative to the base body (6).

8. Injection molding tool according to claim 6 or 7, **characterized in that** the releasable connection (9) is mounted on the piston rod (33) of the actuating piston (31).

9. Injection molding tool according to claim 6, 7 or 8, **characterized in that** the single-acting actuating cylinder (25) has a piston spring (27) which spring-loads the actuating piston (31) away from the cavity (2).

10. Injection molding tool according to one of claims 6 to 9, **characterized in that** the pressure line (26) is designed as a pneumatic pressure line (26).

11. Injection molding tool according to one of claims 1 to 10, **characterized in that** the releasable connection (9) forms both a recess (20) and a retaining ring (16) displaceably mounted in the base body (6) and having at least one guide opening (17) in which the latching element (11) is loosely mounted, wherein the retaining ring (16) is designed to be displaceable, depending on the pressure of the pressure means (10), between its locking or unlocking position for moving the latching element (11), in which unlocking position the recess (20) adjoins the guide opening (17) of the retaining ring (16) for the penetration of the latching element (11) and thus for releasing the connection (9) between the base body (6) and the mold insert (8).

12. Injection molding tool according to claim 11, **characterized in that** the retaining ring (16) is firmly connected to the actuating piston (31) of the actuating cylinder (25).

13. Injection molding tool according to one of claims 1 to 12, **characterized in that** the mold insert (8) comprises a magnetically attractable material.

## Revendications

1. Outil de moulage par injection avec une cavité (2) pour former une pièce moulée et avec au moins une platine de moule (5) délimitant au moins en partie la cavité (2), qui comporte un corps de base (6) avec un logement (7), un insert de moule (8) prévu dans le logement (7) et délimitant la cavité (2) et un assemblage pouvant être défait (9) entre le corps de base (6) et l'insert de moule (8) pour le remplacement de l'insert de moule (8), dans lequel le corps de base (6) comporte des moyens de pression (10) et dans lequel la liaison pouvant être défaite (9) comprend au moins un élément d'enclenchement (11) supporté de façon mobile dans le corps de base (6), qui coopère avec l'insert de moule (8) en fonction de la pression du moyen de pression (10) pour défaire ou verrouiller la liaison (9) entre le corps de base (6) et l'insert de moule (8), la liaison pouvant être défaite (9) comprenant au moins un creux de verrouillage (13) sur l'insert de moule (8) et l'élément d'enclenchement (11) pouvant, selon la pression du moyen de pression (10), soit être chassé du creux de verrouillage (13) de l'insert de moule (8) pour défaire la liaison (9) entre le corps de base (6) et l'insert de moule (8), soit enfoncé dans le creux de verrouillage (13) de l'insert de moule (8) pour verrouiller la liaison (9) entre le corps de base (6) et l'insert de moule (8), **caractérisé en ce que** la liaison pouvant être défaite (9) est supportée de façon mobile sur le corps de base (6), en particulier avec possibilité de translation, en fonction de la pression du moyen de pression (10).

2. Outil de moulage par injection selon la revendication 1, **caractérisé en ce que** l'insert de moule (8) présente un goujon de verrouillage (14) comportant le creux de verrouillage (13).

3. Outil de moulage par injection selon la revendication 1 ou 2, **caractérisé en ce que** l'élément d'enclenchement (11) est supporté avec possibilité de translation dans le corps de base (6).

4. Outil de moulage par injection selon la revendication 3, **caractérisé en ce que** l'élément d'enclenchement (11) présente au moins une bille d'enclenchement (12).

5. Outil de moulage par injection selon la revendication 1, **caractérisé en ce que** le corps de base (6) forme une butée (28) qui limite en butée le déplacement en translation de la liaison pouvant être défaite (9) vers la cavité (2).

6. Outil de moulage par injection selon l'une des revendications 1 à 5, **caractérisé en ce que** le moyen de pression (10) comprend une conduite sous pression (26) et un vérin d'actionnement (25) qui s'y raccorde, dont le piston d'actionnement (31) est en liaison active avec la liaison pouvant être défaite (9).

7. Outil de moulage par injection selon la revendication 6, **caractérisé en ce que** le piston d'actionnement (31) est en liaison active par rapport au corps de base (6) pour le déplacement et en particulier la translation de l'élément d'enclenchement dans la liaison pouvant être défaite (9) et pour le mouvement de la liaison pouvant être défaite (9).

8. Outil de moulage par injection selon la revendication 6 ou 7, **caractérisé en ce que** la liaison pouvant être défaite (9) est supportée sur la tige de piston (33) du piston d'actionnement (31).

9. Outil de moulage par injection selon la revendication 6, 7 ou 8, **caractérisé en ce que** le vérin d'actionnement (25) à simple action comprend un ressort de piston (27) qui contraint le piston d'actionnement (31) pour l'éloigner de la cavité (2).

10. Outil de moulage par injection selon l'une des revendications 6 à 9, **caractérisé en ce que** la conduite sous pression (26) est réalisée comme une conduite sous pression (26) pneumatique.

11. Outil de moulage par injection selon l'une des revendications 1 bis 10, **caractérisé en ce que** la liaison pouvant être défaite (9) forme aussi bien un renfoncement (20) qu'une bague de maintien (16) supportée avec possibilité de translation dans le corps de base (6) et munie d'au moins une ouverture de guidage (17) dans laquelle l'élément d'enclenchement (11) est supporté sans serrage, la bague de maintien (16) étant capable de translation selon la pression du moyen de pression (10) entre une position de verrouillage et une position de déverrouillage du mouvement de l'élément d'enclenchement (11), le renfoncement (20) se raccordant à l'ouverture de guidage (17) de la bague de maintien (16) dans la position de déverrouillage pour permettre la pénétration de l'élément d'enclenchement (11) et ainsi la dissociation de la liaison (9) entre le corps de base (6) et l'insert de moule (8).

12. Outil de moulage par injection selon la revendication 11, **caractérisé en ce que** la bague de maintien (16) est reliée de façon fixe au piston d'actionnement (31) du vérin d'actionnement (25).

13. Outil de moulage par injection selon l'une des revendications 1 à 12, **caractérisé en ce que** l'insert de moule (8) contient un matériau pouvant subir une attraction magnétique.
